# EUROPEAN PATENT APPLICATION

(11) **EP 0 590 654 A1**
(43) Date of publication of application: **06.04.1994**
(21) Application number: 93115756.4
(22) Date of filing: 29.09.1993
(51) Int. Cl.: B60S 5/00, B60H 3/00, G01M 3/04, G01M 17/00

(54) **Apparatus and method for deodorizing a vehicle and for detecting air leaks**

(30) Priority: 30.09.1992 US 953825
(71) Applicant: PERIMETER TECHNOLOGY CORPORATION, Burnaby, British Columbia V3N 4T7 (CA)
(72) Inventor: Hubert, Keith George, Langley, British Columbia V2Z 1A3 (CA)
(74) Representative: Vogeser, Werner, Dipl.-Ing.

(57) **Abstract**

An apparatus for deodorizing a vehicle (18) having an inside, an outside, a door frame (24), a door (26) cooperating with the door frame, a window frame (28) in the door, and a window (30) cooperating with the window frame, includes a device (12) for generating pressurized, relatively clean air and a conducting device (14) for conducting a flow of such pressurized, relatively clean air to the vehicle (18). The air is blown into the vehicle through a vehicle interface (16) including a body (94) operable to be inserted between the window (30) and the window frame (28) and a pliable, substantially air impervious member (105). The body (94) has an inlet opening (101) and an outlet opening (103) in communication with the inlet opening (101), the inlet opening receiving the flow of relatively clean air from the conducting device (14). The pliable, substantially air impervious member (105) has an outer edge portion (124) and a connecting portion (135) connected to the body (94) in an area between the inlet (101) and the outlet (103), and has an intermediate portion (137) between the outer edge portion (124) and the connecting portion (135).

## Description

### BACKGROUND OF THE INVENTION

This invention relates to space drying and deodorizing equipment, particularly that used for drying and deodorizing vehicles and has a specific relation to a device for admitting a flow of pressurized air into a vehicle.

Vehicles such as automobiles, trucks and recreational vehicles are designed to admit air into their passenger compartments through given air intake areas and to exhaust such air through given air exhaust areas. Such vehicles are, however, subjected to diverse climatic conditions such as heat, cold, rain, snow and wind which cause expansion, contraction and corrosion of various components. This can be particularly damaging to window seals, door seals and other areas where two components are connected together such as in the case of robot sealed seams of sheet metal commonly found on newer vehicles.

When window or door seals are damaged such as by the severe conditions mentioned above or by damage due to a crash, their function may be severely degraded to a point where air or water is admitted into the vehicle at undesired locations which usually are difficult to locate. Damaged seals result in excessive wind noise or whistling when driving at high speeds and can result in water leaks.

Conventional methods of detecting damaged seal areas involve driving down a highway at high speed while listening for air escaping from the vehicle. Sometimes dashboard panels must be removed to enable one to listen for drafts in otherwise inaccessible areas. For safety, these methods of detecting should employ two persons; one to drive and one to listen for drafts. This, however, is impractical as the labour cost is prohibitive.

Besides the problem with air or water leaks, the air in a vehicle can become stale, especially when tobacco smoke has been in the vehicle or when the inside of the vehicle has become wet. Conventional hang-up air fresheners only serve to mask such odours and are usually not able to remove these odours. With a wet vehicle, the ability to dry the wetness is dependent upon the ambient temperature outside of the vehicle.

There exists therefore, a problem in detecting damaged seal areas of a vehicle, in drying a wet interior of a vehicle and a problem in the removal of unwanted odours in a vehicle. The present invention addresses these problems.

### SUMMARY OF THE INVENTION

In accordance with one aspect of the invention there is provided an apparatus for deodorizing a vehicle having an inside, an outside, a door frame, a door cooperating with the door frame, a window frame in the door, and a window cooperating with the window frame. The apparatus includes a device for generating pressurized, relatively clean air and a conducting device for conducting such pressurized, relatively clean air to the vehicle. The air is blown into the vehicle through a vehicle interface including a body operable to be inserted between the window and the window frame and a pliable, substantially air impervious member. The body has an inlet opening and an outlet opening in communication with the inlet opening, the inlet opening receiving the pressurized relatively clean air from the conducting device. The pliable, substantially air impervious member has an outer edge portion and a connecting portion connected to the body in an area between the inlet and the outlet, and has an intermediate portion between the outer edge portion and the connecting portion. The pliable member extends outwardly from the body a sufficient distance such that the edge portion can be located between the door and the door frame and such that the intermediate portion covers the area between the window and the window frame thereby substantially preventing air on the inside of the vehicle from passing to the outside of the vehicle. The apparatus may also be used on a roof vent or on vehicles having no separate window frame.

Preferably, the apparatus has registration means including an edge member having a simulated window edge portion connected to a first portion of the body and a frame member having a simulated window frame portion connected to a second portion of the body such that the simulated window edge portion is received and held in the window frame and such that the simulated window frame portion receives and holds the window of the vehicle.

Also preferably, there is provided an ozone generator for generating ozone and for admitting such ozone into the vehicle.

In addition there is provided a method of deodorizing a vehicle having an inside, an outside, a door frame, a door cooperating with the door frame, a window frame in the door, and a window cooperating with the window frame, the method comprising the steps of:
a) opening the door;
b) opening the window, at least partially;
c) inserting a body between the window and the window frame;
d) closing the window until a simulated window edge portion of the body is snugly received in the window frame and a portion of the window is received in a simulated frame portion of the body;
e) closing the door such that edges of a pliable, substantially air impervious member connected to the body are disposed between the door and the door frame when the door is closed, whereby intermediate portions of the pliable member cover any space between the window and the window frame;
f) generating a flow of clean pressurized air;
g) admitting the flow of clean pressurized air into an inlet opening in the body, the inlet opening being disposed on the outside of the vehicle; and
h) conducting the flow of clean pressurized air from the inlet opening to an outlet opening in the body, the outlet opening being on the inside of the vehicle.

In addition there is provided a method of admitting a flow of pressurized air into a vehicle having an inside, an outside, a door frame, a door cooperating with the door frame, a window frame in the door, and a window cooperating with the window frame, the method comprising the steps of:
a) opening the door;
b) opening the window, at least partially;
c) inserting a body between the window and the window frame;
d) closing the window until a simulated window edge portion of the body is snugly received in the window frame and a portion of the window is received in a simulated frame portion of the body;
e) closing the door such that edges of a pliable, substantially air impervious member connected to the body are disposed between the door and the door frame when the door is closed, whereby intermediate portions of the pliable member cover any space between the window and the window frame;
f) admitting a flow of pressurized air into an inlet opening in the body, the inlet opening being disposed on the outside of the vehicle; and
g) conducting a flow of pressurized air from the inlet opening to an outlet opening in the body, the outlet opening being on the inside of the vehicle.

The present invention serves to aid in locating faults, voids or openings in the passenger compartment of a vehicle. In addition, the present invention enables a technician to align doors, windows, etc. by simply adjusting them until there are no air leaks around these components. The present invention also permits deodorizing the interior of a vehicle and drying of wet interior portions of a vehicle.

### BRIEF DESCRIPTION OF THE DRAWINGS

- Figure 1: is a schematic diagram of an apparatus according to a first embodiment of the invention.
- Figure 2: is an oblique view of a vehicle interface according to the first embodiment of the invention.
- Figure 3: is a cross-sectional view of the vehicle interface of Figure 2.
- Figure 4: is a side view of a vehicle fitted with a vehicle interface according to the first embodiment of the invention.
- Figure 5: is an oblique view of the vehicle interface of Figure 2 shown connected to a roof vent of a recreational vehicle.

### DETAILED DESCRIPTION

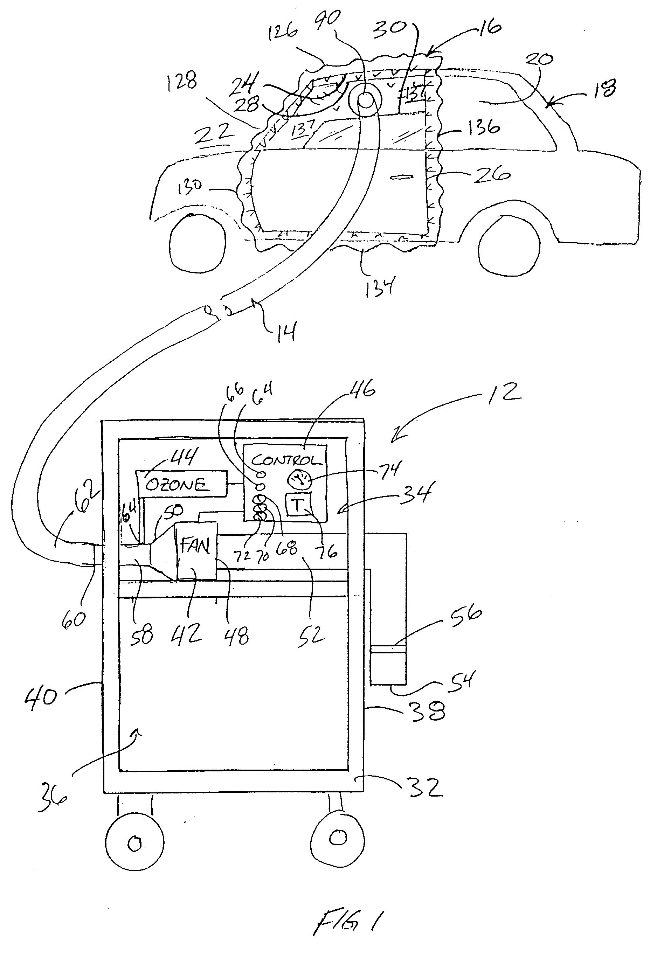

Referring to Figure 1 an apparatus, for deodorizing a vehicle, according to first embodiment of the invention is shown generally at 10. The apparatus includes a main unit 12, a flexible conduit 14 and a vehicle interface 16, the vehicle interface being shown connected to a vehicle 18. For the purposes of defining the environment in which the vehicle interface 16 is used, the vehicle 18 is of the type having an inside 20, an outside 22, a door frame 24, a door 26 cooperating with the door frame 24, a window frame 28 in the door 26, and a window 30 cooperating with the window frame 28.

### Main unit

Still referring to Figure 1, the main unit 12 includes a rollable cart 32 having a top portion 34, a bottom portion 36, first and second opposite end portions 38 and 40 and first and second opposite side portions. The side portions are parallel to the plane of the drawing and therefore cannot be seen in Figure 1.

The top portion 34 is fitted with a fan 42, an ozone generator 44 and a control unit 46. The fan 42 has an inlet 48 and an outlet 50. The inlet 48 is connected to a conduit 52 which extends out the first end portion 38 and which is directed downward, toward the lower portion 36 of the cart. The conduit 52 has an inlet 54 disposed adjacent the lower portion 36 and has a washable-type wire mesh air filter 56 disposed upstream of the fan within the inlet for filtering air drawn into the inlet by the fan 42. The outlet 50 of the fan 42 is connected to an outlet conduit 58 which extends out the second end portion 40 of the cart. The outlet conduit 58 has an exterior outlet 60 which is connected to a first end portion 62 of the flexible conduit 14 such that air blown by the fan is directed into the flexible conduit 14.

In the preferred embodiment, the fan is capable of moving 520 cubic feet per minute at a static pressure of 2.8 inches water column. A Kanalflakt Model K-8-L 520 cfm, centrifugal duct fan manufactured by Kanalflakt Inc. of Sarasota, Florida, has been found suitable for this purpose.

The ozone generator 44 receives ambient air located in the top portion 34 and produces ozone at a constant rate of 250 milligrams per hour. The ozone so produced is provided at an ozone outlet 64 which is located inside the outlet conduit 58 such that the ozone produced by the generator is introduced into the air flow created by the fan at the high pressure side of the fan. The ozone is mixed with air blown by the fan 42 and hence is blown down the flexible conduit 14. In order to ensure that the ozone is received in the outlet conduit 58, it is necessary that the static pressure of the ozone is greater than the static pressure of air blown by the fan. Using the components described thus far, the ozone generator is capable of producing ozone at a static pressure greater than 2.8 inches of water column. It has been found that ozone generator Model HTU-500 D.C. manufactured by Azco Industries Ltd. of Surrey, British Columbia, is suitable for the purposes described herein.

The fan 42 and ozone generator 44 are controlled by the control unit 46. The control unit includes a fan indicator 64, an ozone indicator 66, a fan on/off switch 68, a fan speed control 70, an ozone on/off switch 72, a 0-3 inch static pressure gauge 74 and a dual sequence timer 76. The fan indicator 64 and ozone indicator 66 are actuated when the fan 42 and ozone generator 44, respectively, are in operation. The fan on/off switch 68 and the ozone on/off switch 72 are operable to switch the fan and ozone generator on and off, respectively. The fan speed control 70 acts to control the speed of the fan in order to permit adjustment of the static pressure of the air blown into the flexible conduit 14. The static pressure gauge 74 is connected to the outlet conduit 58 in order to measure the static pressure at the outlet 50 of the fan 42. The dual sequence timer 76 allows independent timed control of the fan 42 and the ozone generator 44.

### Flexible conduit

In this embodiment, all components downstream of the output 66 are made of an ozone resistant material. In particular, the flexible conduit 14 is made of a one ply polyester vinyl laminate which not only is resistant to ozone but is lightweight, highly compressible, resistant to ultraviolet radiation, resistant to mildew, and impervious to leakage from most oils, water, chemicals and grease. In this embodiment, flexible hose Model IPV-RPW manufactured by Dura-vent Inc. of Plymouth, Indiana, has been found suitable for the purposes described. In this embodiment, the flexible conduit is 8 inches in diameter and has a length of approximately 25 feet. Hoses of other diameters and lengths would serve the same purpose, that is, to conduct a flow of pressurized air and ozone from the main unit to the vehicle interface. The flexible conduit 14 acts as conducting means for conducting pressurized air from the fan to the vehicle.

### Vehicle interface

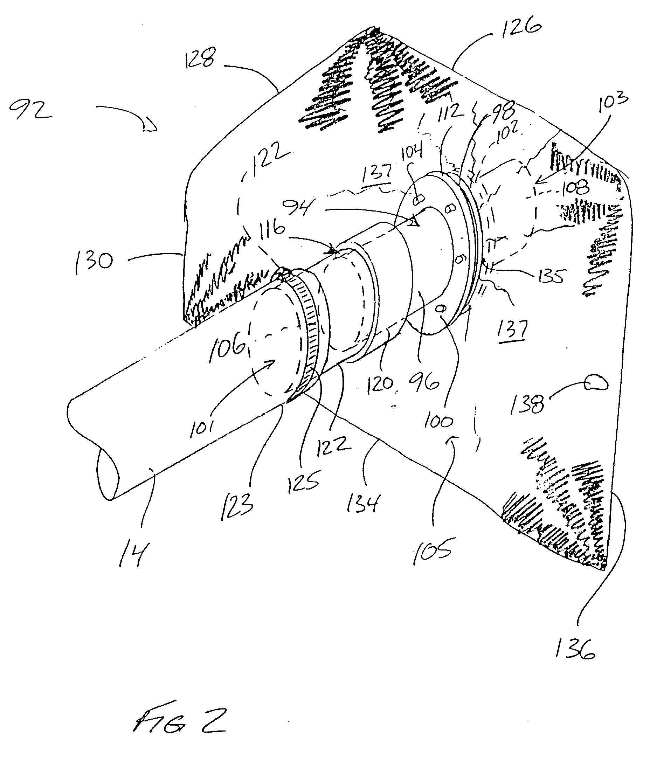

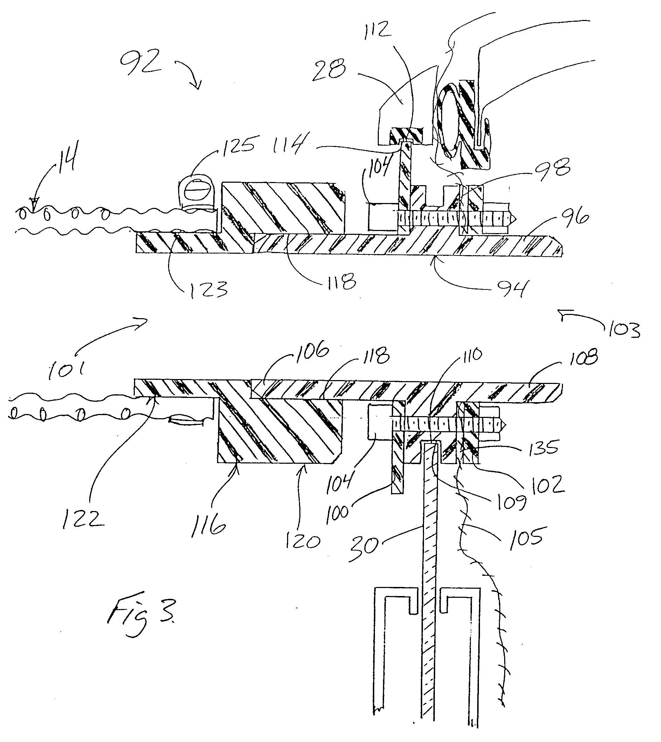

Referring to Figures 2 and 3, a vehicle interface according to the invention is shown generally at 92. The vehicle interface includes a body operable to be inserted between the vehicle window 30 and the window frame 28. The body is shown generally at 94 and is comprised of a conduit portion 96 having an integral first flange 98, a large diameter flange 100 and a small diameter flange 102 secured to the integral first flange by bolts 104. A sheet 105 of parachute grade nylon measuring approximately 6 feet by 6 feet is secured between the integral first flange and the small diameter flange such that the sheet can be spread out radially relative to the conduit.

The conduit portion 96 has an inlet side and an outlet side 106 and 108 respectively, these sides being referenced relative to the integral flange 98 and corresponding to their respective positions relative to the vehicle when the interface is in use. The inlet side has an inlet opening 101 and the outlet side has an outlet opening 103 which, of course, are in communication with each other. The large diameter flange 100 is secured to the integral flange 98 on the inlet side 106 thereof and the small diameter flange 102 is secured to the integral flange 98 on the outlet side 108 thereof, with the parachute nylon 105 being disposed between the integral flange 98 and the small diameter flange 102.

In the embodiment shown, the conduit 96 is preferably formed from a conventional 8 inch piece of plastic sewer pipe having a wall thickness of approximately 5/8 inches. The pipe is turned on a lathe such that the integral flange 98 is formed to protrude approximately 1/4 inches above the outside wall of the conduit 98. The integral flange 98 is preferably formed with a 1/16 inch groove 109 which is operable to receive an edge portion 110 of the vehicle's window 30 therein. The large diameter flange 100 has a diameter larger than the original outside diameter of the sewer pipe such that a portion 112 of the flange 100 extends radially outward further than the integral flange 98. This extending portion of the large diameter flange 100 is operable to be received in a window seal 114 conventionally secured to the window frame.

The flexible conduit 14 is secured to the conduit by a hose connector 116 formed from a second piece of sewer pipe. The hose connector 116 is formed by boring the inside wall 118 of a first end portion 120 of the sewer pipe to enlarge the inside diameter sufficient to receive the outside diameter of the inlet side 106 of the conduit 96. Similarly, an opposite end portion 122 of the second sewer pipe is turned to reduce its diameter such that the end portion 122 may be received in a second end portion 123 of the flexible conduit 14. The second end portion is secured to the second pipe by a conventional hose clamp 125 and care is taken to ensure a good airtight fit between the flexible conduit 14 and the hose connector 116. The conduit portion 96 is thus operable to receive a flow of pressurized air from the flexible conduit 14 and directs this flow of air to be expelled out of the outlet opening 103.

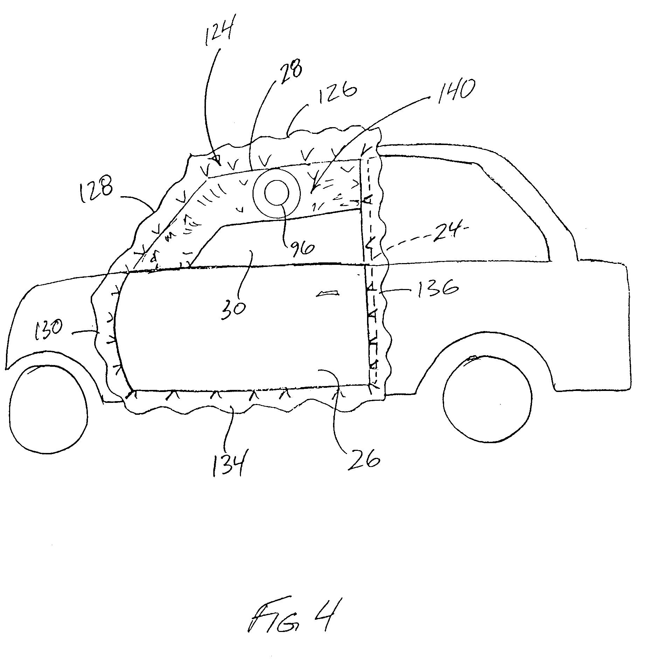

Referring to Figures 2 and 4, the sheet 105 of parachute material is a relatively thin sheet of pliable, substantially air impervious parachute grade nylon. The sheet 105 has an outer perimeter edge portion comprised of a top edge portion 126, a slanted portion 128, a vertical front portion 130, a bottom portion 134 and a side portion 136. Approximately centrally of the sheet 105 a circular opening is formed in the sheet. The circular opening has a diameter of sufficient size to permit the outlet side 108 of the conduit portion 96 to be received therein. Material of the sheet adjacent the circular opening acts as a connection portion 135 for connecting the sheet 105 to the body. The connecting portion 135 is sandwiched between the integral flange 98 and the small diameter flange 102 and is thus connected to the outlet side of the conduit. The side portion 136 of the sheet 105 has an opening 138 for receiving a conventional door latch member therein. Located between the outer perimeter edge portion and the connecting portion 135 is an intermediate portion 137.

### Operation

Referring to Figure 4, the apparatus is prepared for use by opening the door 26 of the vehicle and partially rolling down the window 30. With the door open, the apparatus is taken to the inside of the car and the conduit portion 96 is positioned in a space shown generally at 140, between the window 30 and the window frame 28. Referring to Figure 3, the window 30 is then rolled up until the window is received in the groove 109 in the integral flange 98 and such that the projecting portion 112 of the large diameter flange 100 is received in the window seal 114. The projecting portion 112 thus acts as a simulated window edge portion and the groove 109 acts as a simulated window frame portion. As the projecting portion 112 and the groove 109 are part of the body, these items may be referred to as registration means on the body for registering the body between a vehicle window and associated window frame. The conduit portion 96 is thus held in place by squeezing it between the window frame 28 and the window itself 30.

Referring back to Figure 4, with the conduit portion 96 securely held between the window 30 and the window frame 28, the sheet 105 is spread outwardly from the conduit a sufficient distance such that the top 126, slanted 128, front vertical 130, bottom 134, and side portions 136 extend outwardly past the edges of the door frame 24. Referring to Figure 2, the opening 138 is looped around the door latch in the door.

Referring to Figure 1, the door 26 is then closed such that the top portion 126, slanted portion 128, vertical front portion 130, bottom portion 134 and side portion 136 are located between corresponding portions of the door 26 and door frame 24. The apparatus is thus secured in place on the vehicle. Referring to Figure 3, when the apparatus is in place the inlet portion 106 is located on the outside 22 of the vehicle whereas the outlet portion 108 is located on the inside 20 of the vehicle. Pressurized air conducted by the flexible conduit 14 is conducted through the inlet opening 101 and is expelled from the outlet opening 103 disposed inside the vehicle. The intermediate portion 137 of the sheet 105 acts to cover the space between the window and the window frame and prevents air from escaping through the opening 140 shown in Figure 4 and also prevents air from escaping around the edges of the door 26, between the door and door frame 24. The vehicle may therefore be pressurized.

Referring back to Figure 1, the inside of the vehicle may be pressurized by actuating the fan switch 68 to turn on the fan 42. The fan speed control 70 may then be adjusted to cause a suitable volume of air to be delivered to the vehicle at a desired static pressure determined by the volume of the vehicle sought to be diagnosed. For example, assuming the vehicle has a volume of approximately 100 cubic feet, the air fan control 80 may be set to produce 150 cubic feet/minute of air.

The vehicle can then be coated with a solution of soap and water. Soap bubbles will appear at locations on the vehicle where air is escaping. A trained technician will acknowledge air escaping from known air escapement areas and will recognize the areas which are not designed to permit air to escape. The technician can then seal these areas and repeat the process to ensure that the sealing process has been effective. The ability to adjust the volume of air delivered by the fan permits the technician to adjust the pressure of air in the vehicle to cause suitable bubble production at areas suspected of unwanted air leaks.

For vehicles which are to be dried and deodorized, the fan and ozone generator switches 68 and 72 can be activated and the timer 76 may be set to maintain the fan in operation for say 4 hours and to begin ozone generation, say, 3 hours after the fan is started and maintain ozone generation for 1/2 hour to deodorize the vehicle. The remaining 1/2 hour of time left on the fan would be used to "flush" any residual ozone from the vehicle, with fresh air.

The apparatus may thus be left unattended for approximately 4 hours, after which time the vehicle will be dried and deodorized. The ozone and fan switches 68 and 72 may then be shut off and the apparatus removed from the vehicle.

### Alternatives

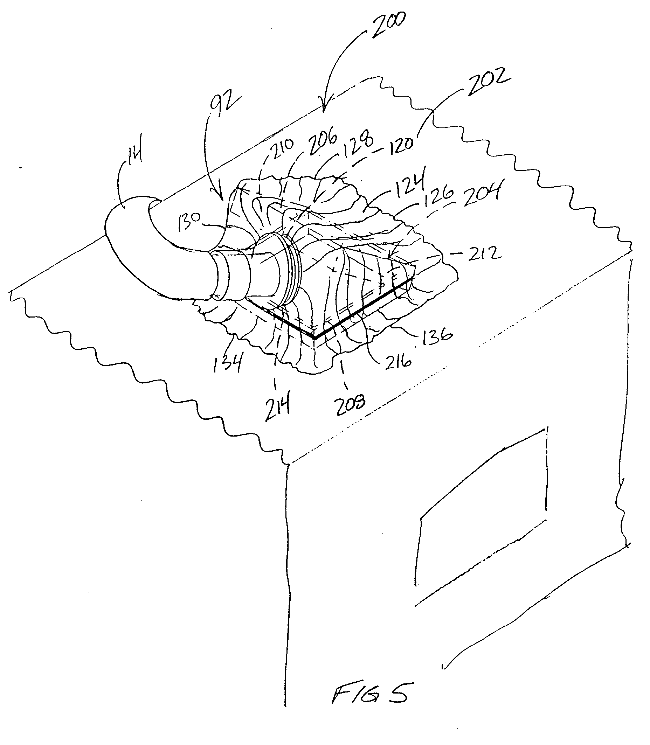

Referring to Figure 5, use of the apparatus is explained in connection with deodorizing a recreational vehicle shown generally at 200. The recreational vehicle has a roof portion 202 with a conventional 14 in. by 14 in. roof vent hatch 204 having a cover portion 206 and a rectangular upstanding wall portion 208. The cover portion has a front portion 210 and side portions, only a first side portion 212 being shown in Figure 5. The front and side portions cover the upstanding wall portion 208 when the roof vent is closed.

The vehicle interface 92 is fitted to the roof hatch 204 by inserting a front portion 214 of the upstanding wall portion 208 into the groove indicated at 109 in Figure 3. Similarly, referring back to Figure 5 the front portion 210 of the cover is received in the groove 109 similar diametrically opposite the front upstanding wall portion 214. The sheet 105 is then draped over the cover portion 206 such that the edges 126, 128, 130, 134 and 136 completely extend about the roof hatch portion 204. A suitably sized elastic band 216 is then placed about the upstanding wall portion 208 to secure the sheet 105 thereto.

Referring back to Figure 1, the apparatus may be switched on as described above and the processes of detecting leaks, drying and deodorizing can be performed as described above.

Depending upon the size of the recreational vehicle, additional fans, such as fan 42 in Figure 1 can be operated in series to provide the same amount of cubic feet/minute of air but at greater static pressure. Alternatively, a larger fan such as the Kanalflakt Model K-10-L 635 cfm fan may be substituted for the K-8-L 520 cfm fan described above, when the device is to be used for recreational vehicles, trucks or buses.

While specific embodiments of the invention have been described and illustrated, such embodiments should be considered illustrative of the invention only and not as limiting the invention as construed in accordance with the accompanying claims.

## Claims

1. A vehicle interface apparatus for admitting a flow of pressurized air into a vehicle having an inside, an outside, a door frame, a door cooperating with said door frame, a window frame in said door, and a window cooperating with said window frame, the apparatus including:
a) a body operable to be inserted between the window and the window frame, the body having an inlet opening and an outlet opening in communication with the inlet opening, said inlet opening being operable to receive a flow of pressurized air from a source thereof; and
b) a pliable, substantially air impervious member having an outer edge portion, a connecting portion connected to the body in an area between the inlet and the outlet, and an intermediate portion between said outer edge portion and said connecting portion, said pliable member extending outwardly from said body a sufficient distance such that said edge portion can be located between the door and the door frame with the door closed and such that the intermediate portion covers the area between the window and the window frame thereby substantially preventing air on the inside of said vehicle from passing to said outside of said vehicle.

2. An apparatus as claimed in Claim 1 wherein said pliable, substantially air impervious member is in the form of a relatively thin sheet.

3. An apparatus as claimed in Claim 1 wherein said pliable, substantially air impervious member extends generally radially outwardly from said body.

4. An apparatus as claimed in Claim 2 wherein said pliable, air impervious member includes a sheet of parachute grade nylon.

5. An apparatus as claimed in Claim 1 wherein said body includes registration means for registering said body between a vehicle window and an associated window frame.

6. An apparatus as claimed in Claim 5 wherein said registration means includes a simulated window edge portion on a first portion of said body and a simulated window frame portion on a second portion of said body such that said simulated window edge portion is received and held in said associated window frame and such that said simulated window frame portion receives and holds said vehicle window.

7. A method of admitting a flow of pressurized air into a vehicle having an inside, an outside, a door frame, a door cooperating with said door frame, a window frame in said door, and a window cooperating with said window frame, the method comprising the steps of:
a) opening said door;
b) opening said window, at least partially;
c) inserting a body between said window and said window frame;
d) closing said window until a simulated window edge portion of said body is snugly received in said window frame and a portion of said window is received in a simulated frame portion of said body;
e) closing said door such that edges of a pliable, substantially air impervious member connected to the body are disposed between said door and said door frame when said door is closed, whereby intermediate portions of said pliable member cover any space between the window and the window frame;
f) admitting a flow of pressurized air into an inlet opening in said body, the inlet opening being disposed on the outside of the vehicle; and
g) conducting said flow of pressurized air from said inlet opening to an outlet opening in said body, said outlet opening being on said inside of said vehicle.

8. An apparatus for deodorizing a vehicle having an inside, an outside, a door frame, a door cooperating with said door frame, a window frame in said door, and a window cooperating with said window frame, the apparatus including:
a) generating means for generating a flow of pressurized, relatively clean air;
b) conducting means for conducting said pressurized, relatively clean air to said vehicle;
c) a vehicle interface including:
i) a body operable to be inserted between the window and the window frame, the body having an inlet opening and an outlet opening in communication with the inlet opening, said inlet opening receiving said flow of pressurized relatively clean air from said conducting means; and,
ii) a pliable, substantially air impervious member having an outer edge portion and a connecting portion connected to the body in an area between the inlet and the outlet, and an intermediate portion between said outer edge portion and said connecting portion, said pliable member extending outwardly from said body a sufficient distance such that said edge portion can be located between the door and the door frame and such that the intermediate portion covers the area between the window and the window frame thereby substantially preventing air on the inside of said vehicle from passing to said outside of said vehicle.

9. An apparatus as claimed in Claim 8 wherein said generating means includes a fan and a filter located upstream of the fan, the fan developing a flow of said pressurized, relatively clean air by drawing air through said filter and directing said flow into said conducting means.

10. An apparatus as claimed in Claim 9 further including an ozone generator for generating ozone operable to be conducted by said conducting means to said vehicle.

11. An apparatus as claimed in Claim 10 wherein said ozone generator supplies ozone to a high pressure side of said fan for conduction to said vehicle.

12. An apparatus as claimed in Claim 8 wherein said conducting means includes a flexible conduit.

13. An apparatus as claimed in Claim 8 wherein said pliable, substantially air impervious member is in the form of a relatively thin sheet.

14. An apparatus as claimed in Claim 8 wherein said pliable, substantially air impervious member extends generally radially outwardly from said body.

15. An apparatus as claimed in Claim 13 wherein said pliable, air impervious member includes a sheet of parachute grade nylon.

16. An apparatus as claimed in Claim 8 wherein said body includes registration means for registering said body between a vehicle window and an associated window frame.

17. An apparatus as claimed in Claim 16 wherein said registration means includes an edge member having a simulated window edge portion connected to a first portion of said body and a frame member having a simulated window frame portion connected to a second portion of said body such that said simulated window edge portion is received and held in said associated window frame and such that said simulated window frame portion receives and holds said vehicle window.

18. A method of deodorizing a vehicle having an inside, an outside, a door frame, a door cooperating with said door frame, a window frame in said door, and a window cooperating with said window frame, the method comprising the steps of:
a) opening said door;
b) opening said window, at least partially;
c) inserting a body between said window and said window frame;
d) closing said window until a simulated window edge portion of said body is snugly received in said window frame and a portion of said window is received in a simulated frame portion of said body;
e) closing said door such that edges of a pliable, substantially air impervious member connected to the body are disposed between said door and said door frame when said door is closed, whereby intermediate portions of said pliable member cover any space between the window and the window frame;
f) generating a flow of clean pressurized air;
g) admitting said flow of clean pressurized air into an inlet opening in said body, the inlet opening being disposed on the outside of the vehicle; and
h) conducting said flow of clean pressurized air from said inlet opening to an outlet opening in said body, said outlet opening being on said inside of said vehicle.

19. A method as claimed in Claim 18 further including the step of admitting ozone into said inlet opening.

20. A method as claimed in Claim 18 further including the steps of remotely generating said flow of pressurized clean air and conducting said flow of pressurized clean air to said inlet opening.
